Europäisches Patentamt

European Patent Office

Office européen des brevets

(11) Publication number: **0 594 082 A1**

## EUROPEAN PATENT APPLICATION

(21) Application number: **93116728.2**

(22) Date of filing: **15.10.93**

(51) Int. Cl.5: **G11B 5/72**

(30) Priority: **20.10.92 JP 281472/92**

(43) Date of publication of application:
**27.04.94 Bulletin 94/17**

(84) Designated Contracting States:
**DE FR GB**

(71) Applicant: **MATSUSHITA ELECTRIC
INDUSTRIAL CO., LTD
1006, Oaza Kadoma,
Kadoma-shi
Osaka 571(JP)**

(72) Inventor: **Kuwahara, Kenji
31-11, Tuzi-machi
Ikoma-shi, Nara 630-02(JP)**
Inventor: **Mura, Mikio
2-10-32, Tsudahigashi-machi
Hirakata-shi, Osaka 573-01(JP)**
Inventor: **Takahashi, Kiyosi
2-1-14, Ayukawa
Ibaraki-shi, Osaka 567(JP)**
Inventor: **Odagiri, Masaru
2-2-46, Seiwadainishi
Kawanishi-shi, Hyogo 666-01(JP)**
Inventor: **Ueda, Hideyuki
5-11-301, Makita-cho
Takatsuki-shi, Osaka 569(JP)**
Inventor: **Seki, Hiroshi
5-2-401, Myoukenzaka
Katano-shi, Osaka 576(JP)**

(74) Representative: **Patentanwälte Grünecker,
Kinkeldey, Stockmair & Partner
Maximilianstrasse 58
D-80538 München (DE)**

(54) **Magnetic recording medium and its manufacturing method.**

(57) A magnetic recording medium comprises a nonmagnetic substrate , a ferromagnetic thin film formed on the nonmagnetic substrate, an anticorrosive layer formed by vaporization on the ferromagnetic thin film, wherein the anticorrosive layer is at least one selected from the group consisting of organic compound including nitrogen, organic compound including sulfur, organic compound including phosphorus and organic compound including oxygen, a carbon film, of which Vickers hardness is 1,500 kg/mm$^2$ or more on the anticorrosive layer, and a lubricant layer on the carbon film.

Rank Xerox (UK) Business Services
(3.10/3.09/3.3.4)

Fig. 1

Fig. 1

Field of the Invention

The present invention relates to a thin film magnetic recording medium used in an apparatus requiring high packing density recording, such as digital video tape recorder or high definition video tape recorder, and a method of manufacturing the same.

Background of the Invention

A thin film magnetic recording medium ( hereinafter described magnetic tape ) manufactured by forming a ferromagnetic thin film on a nonmagnetic substrate. The magnetic tape realizes high packing recording than a coating type magnetic tape.

The magnetic tape can record and reproduce short wavelength signals and realize high packing density recording, because the residual flux density is high, the homogeniety of the magnetic film is excellent, the magnetic film does not include bonding resin, and the thickness of the magnetic film is sm all.

However, the magnetic film is very smooth, low in hardness, and is easily deformed plastically.

Accordingly, the magnetic film may be worn or damaged when sliding on a magnetic head, or corrodes when exposed to high humidity. Such phenomena extremely lower the recording and reproducing characteristics of signals.

Many inventions have been proposed to improve this.

The prior arts invented to improve wear and damage include the techniques of forming a protective film on the magnetic film.

For example, a silicon oxide film is formed ( the Japanese Patent Laid-Open No. 59-229743 / '84 ), a carbon film is formed ( the Japanese Patent Laid-Open No. 61-142525 / '86, 61-208622 / '86 ), or a diamond-like carbon film is formed ( the Japanese Patent Laid-Open No. 61-210518 / '86, 62-219314 / '87 ).

As the prior arts invented to improve corrosion, an anticorrosive layer is formed on a magnetic film, and a lubricant layer containing anticorrosive materials in part is sequentially formed thereon ( the Japanese Patent Laid-Open No. 58-189833 / '83 ), a lubricant layer containing anticorrosive component is formed on a magnetic film ( the Japanese Patent Laid -Open No. 62-236119 / '87 ), an anticorrosive layer is formed on a magnetic film, and alubricant layer is sequentially formed thereon ( the Japanese Patent Laid-Open No. 63-813 / '88 ), or a passive layer is formed on a magnetic film and an anticorrosive layer is formed thereon ( the Japanese Patent Laid-Open No. 63-200315 / '88 ).

Among these prior arts, the magnetic tape protected by a diamond-like carbon film improved the still frame life and running durability in ordinary environments, but in the environment of 40 °C - 90 % RH ( relative humidity ), the magnetic film was peeled off the nonmagnetic substrate, and rusted easily. As a result, increase of dropout, lowering of output, and lowering of still frame life occurred. Such phenomena are due to the insufficient orientation of the lubricant because the bonding strength between the diamond-like carbon film and the lubricant is low.

On the other hand, in the magnetic tape manufactured by forming an anticorrosive layer on a magnetic film, and a lubricant layer containing anticorrosive materials in part thereon, the running durability is not sufficient. This is because, it seems, the effect of the lubricant is not exhibited sufficiently and the coefficient of friction is high as the anticorrosive and lubricant are present in a mixed state.

Meanwhile, in the magnetic tape manufactured by forming an anticorrosive layer on a magnetic film and forming a lubricant thereon, or in the magnetic tape manufactured by forming a passive layer on a magnetic film and forming an anticorrosive layer thereon, the anticorrosive effect and lubricating effect were enhanced a little, but the running durability was not sufficient. This is because the magnetic tape is low in hardness and low in shear stress.

Moreover, it seems that the insufficient lubricating effect is due to the coarse lubricating layer formed by wet coating.

Furthermore, to increase the output, cobalt ( Co ) - nickel ( Ni ) - oxygen ( O ) is replaced by cobalt - oxygen, or the oxygen content of cobalt - nickel - oxygen is lowered, but in such magnetic recording tapes, when a diamond-like carbon film is formed as protective film on the magnetic film, lowering of characteristics was significant in the environment of 40 °C - 90 % RH

Summary of the Invention

Accordingly, it is an object of the present invention to provide a novel magnetic recording medium excellent in electromagnetic conversion characteristic, weatherability, and running durability.

It is obtained by forming a ferromagnetic thin film on a nonmagnetic substrate, forming an anticorrosive layer formed by vaporization, which is at least one selected from the group consisting of organic compound including nitrogen, organic compound including sulfur, organic compound including phosphorus, and organic compound including oxygen, forming a carbon film, of which Vickers hardness is 1500 kg/mm$^2$ or more on the anticorrosive layer, and forming a lubricant layer on the carbon film.

What the magnetic recording medium of the invention differs from the prior arts is that forming a specific anticorrosive layer on a magnetic film by vaporization, not by wet coating, sequentially forming a lubricant layer thereon. The reasons why a magnetic recording medium of excellent characteristics is obtained by the present invention are as follows : (1) a dense anticorrosive layer is formed, (2) the degree of damage of the ferromagnetic thin film by etching action when forming the carbon film is decreased by the anticorrosive layer, (3) an anticorrosive layer having a strong bonding force with a carbon film is formed, (4) the anticorrosive layer prevents moisture and lubricant component from being absorbed in the ferromagnetic thin film or from inducing chemical reaction, and therefore, rusting on the ferromagnetic thin film is prevented, and the ferromagnetic thin film is prevented from being peeled off the nonmagnetic substrate.

Brief Description of the Drawings

Fig. 1 is a sectional view of a magnetic tape of the invention.

Fig. 2 is a sectional view of an apparatus for explaining the method of manufacturing an anticorrosive layer and a carbon film.

Detailed Description of the Invention

Embodiment 1

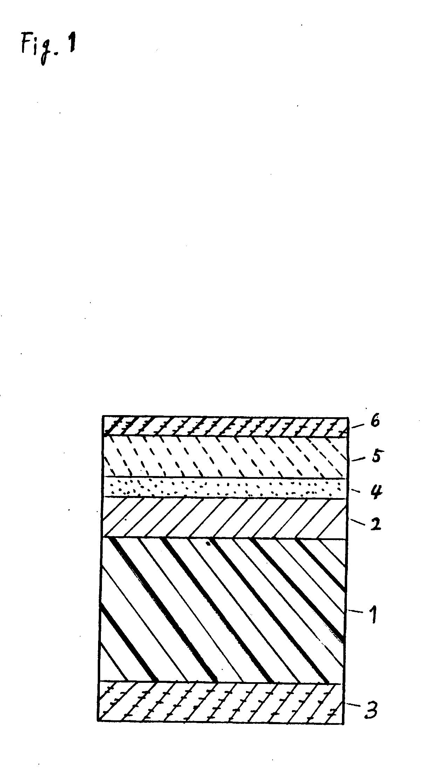

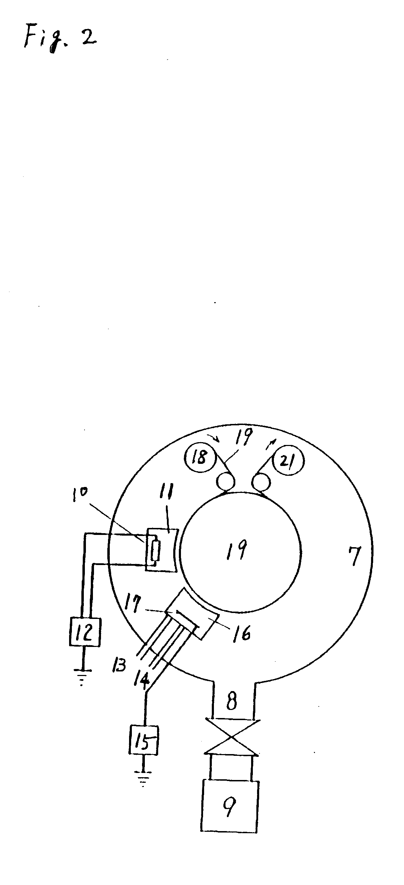

A magnetic tape of a first embodiment of the invention and its manufacturing method are explained while referring to Fig. 1 and Fig. 2.

Fig. 1 is a sectional view of the magnetic tape of the embodiment.

In the drawing, numeral 1 denotes a nonmagnetic substrate.

The nonmagnetic substrate of the embodiment is a polyethyleneterephthalate ( PET ) film of 10 microns in thickness and 500 mm in width, on one side of which protrusions of 30 nm in height and 200 nm in diameter are formed by $10^5$ to $10^9$ pieces per 1 mm$^2$. The height and diameter of protrusions were measured by scanning tunnel microscope ( STM ). The protrusions were formed in order to control the surface roughness of the magnetic tape and decrease friction against the magnetic head.

On the protrusion side of the nonmagnetic substrate, a magnetic film 2 of cobalt ( Co ) - nickel ( Ni ) - oxygen ( O ) was formed in a thickness of 180 nm.

The magnetic film 2 was formed by evaporating 80 wt. % of cobalt ( Co ) and 20 wt. % of nickel ( Ni ) while introducing oxygen by the oblique vacuum deposition technique.

On the other side of the nonmagnetic substrate 1, sequentially, a back coat layer 3 of 500 nm in thickness was formed. The back coat layer 3 was formed by applying and drying a methylethylketone/toluene/cyclohexane solution of polyurethane / nitrocellulose / carbon black ( solid content 30 %) by wet coating ( reverse roll coater method).

Moreover, an anticorrosive layer 4 of 3 nm in thicknesson was formed on the magnetic film 2, sequentially a carbon film 5 of 15 nm in thickness was formed on the anticorrosive layer 4, and a lubricant layer 6 of 4 nm in thickoness was formed on the carbon film 5.

With reference to Fig. 2, the method of forming an anticorrosive layer and a carbon film is described below.

In the drawing, numeral 7 denotes a vacuum cell, and a degree of vacuum of $10^{-4}$ to $10^{-3}$ torr is achieved by evacuating from an exhaust port 8 by a vacuum pump 9.

The anticorrosive layer was formed by evaporating from a nozzle 11, by charging 5-methyl benzotriazole ( a heterocyclic compound possessing a polar group of -OH and including nitrogen atoms ) into a resistance heater 10. Numeral 12 is a power source of the resistance heater, and 100 V, 60 Hz was applied to the resistance heater to evaporate an anticorrosive material.

The carbon film was formed by plasma CVD method by feeding argon gas and hexane gas at a ratio of 1:4 from material gas feed ports 13, 14, respectively, keeping the total gas pressure at 0.3 torr, and superposing an alternating current of 20 kHz, 1500 V on a direct current of 1000 V from a plasma generating power source 15 on an electrode 17 in a discharge tube 16.

EP 0 594 082 A1

Numeral 18 represents an unwinder roll, and a magnetic tape 19 being let off runs along a cooling can 20 and is taken up on a winder roll 21.

After forming the carbon film 5, a 4 nm thick lubricant layer 6 was formed on the carbon film 5.

The lubricant layer was formed by wet coating method, using 2000 ppm isopropylalcohol solution of $C_5F_{11}(CH_2)_{10}COOH$ ( fluorinated carboxylic acid).

Thus fabricated magnetic tape was cut to a width of 8 mm by a slitter, and an 8 mm tape ( 54 m long ) was prepared.

Embodiment 2

An 8 mm tape was prepared in the same manner as in embodiment 1, except that the anticorrosive material in embodiment 1 was replaced by cyclohexylamine ( polar group : $-NH_2$).

Embodiment 3

An 8 mm tape was prepared in the same manner as in embodiment 1, except that the anticorrosive material in embodiment 1 was replaced by alloxane ( polar group : >NH).

Embodiment 4

An 8 mm tape was prepared in the same manner as in embodiment 1, except that the anticorrosive material in embodiment 1 was replaced by hexaneamide ( polar group : $>CONH_2$ ).

Embodiment 5

An 8 mm tape was prepared in the same manner as in embodiment 1, except that the anticorrosive material in embodiment 1 was replaced by acetoacetanilide ( polar group : >CONHR).

Embodiment 6

An 8 mm tape was prepared in the same manner as in embodiment 1, except that the anticorrosive material in embodiment 1 was replaced by N-dimethylacetamide ( polar group : $>CONR_2$ ).

Embodiment 7

An 8 mm tape was prepared in the same manner as in embodiment 1, except that the anticorrosive material in embodiment 1 was replaced by 3 - sulfolene ( a heterocyclic compound including sulfur atoms ).

Embodiment 8

An 8 mm tape was prepared in the same manner as in embodiment 1, except that the anticorrosive material in embodiment 1 was replaced by 2-mercaptothiazol ( polar group : -SH ).

Embodiment 9

An 8 mm tape was prepared in the same manner as in embodiment 1, except that the anticorrosive material in embodiment 1 was replaced by 1-nitroso-2-naphthol-3, 6-disulfuric acid disodium ( polar group : $-SO_3M$ ).

Embodiment 10

An 8 mm tape was prepared in the same manner as in embodiment 1, except that the anticorrosive material in embodiment 1 was replaced by triethyl phosphine ( polar group : >PR ).

Embodiment 11

An 8 mm tape was prepared in the same manner as in embodiment 1, except that the anticorrosive material in embodiment 1 was replaced by triethyl phosphite ( polar group : >P(OR) ).

Embodiment 12

An 8 mm tape was prepared in the same manner as in embodiment 1, except that the anticorrosive material in embodiment 1 was replaced by triethyl phosphate ( polar group : $>P(OR)_2$ ).

Embodiment 13

An 8 mm tape was prepared in the same manner as in embodiment 1, except that the anticorrosive material in embodiment 1 was replaced by dimethyl phosphoric acid ( polar group : $>P(O)R$ ).

Embodiment 14

An 8 mm tape was prepared in the same manner as in embodiment 1, except that the anticorrosive material in embodiment 1 was replaced by triphenyl phosphate ( polar group : $-OPO(OR)_2$ ).

Embodiment 15

An 8 mm tape was prepared in the same manner as in embodiment 1, except that the anticorrosive material in embodiment 1 was replaced by 1 H, 1 H-pentadeca-fluoro-octane-thiol ( polar group : $>PSR$ ).

Embodiment 16

An 8 mm tape was prepared in the same manner as in embodiment 1, except that the anticorrosive material in embodiment 1 was replaced by uridine ( a heterocyclic compound including oxygen atoms ).

Embodiment 17

An 8 mm tape was prepared in the same manner as in embodiment 1, except that the anticorrosive material in embodiment 1 was replaced by quinic acid ( polar group : $-COOH$ ).

Embodiment 18

An 8 mm tape was prepared in the same manner as in embodiment 1, except that the anticorrosive material in embodiment 1 was replaced by sorbitan monolate ( polar group : $-COOR$ ).

Comparative embodiment 1

An 8 mm tape was prepared in the same manner as in embodiment 1, except that the anticorrosive layer 1 was omitted.

Comparative embodiment 2

An 8 mm tape was prepared in the same manner as in embodiment 1, except that the anticorrosive layer was omitted, and that a lubricant layer was formed on the carbon film by wet coating ( reverse roll coater ) of isopropylalcohol solution containing 2000 ppm of cyclohexylamine ( polar group : $-NH_2$ ) of anticorrosive together with $C_5F_{11}$ $(CH_2)_{1\emptyset}COOH$ ( fluorinated carboxylic acid lubricant ).

Comparative embodiment 3

An 8 mm tape was prepared in the same manner as in embodiment 1, except that the carbon film in embodiment 1 was replaced by a carbon film with Vickers hardness of 1300 kg/mm$^2$.

Embodiment 19

An 8 mm tape was prepared in the same manner as in embodiment 1, except that the anticorrosive layer was formed by plasma CVD method.

Comparative embodiment 4

An 8 mm tape was prepared in the same manner as in embodiment 1, except that the anticorrosive layer was formed by wet coating.

In the 8 mm tape obtained in the foregoing embodiments and comparative examples, the following evaluation tests were carried out.

(1) Weatherability test

Each 8 mm tape was let stand in the environment of 40 °C - 90 % RH for 30 days, and the magnetic tape was observed for rust and peel by the differential interference microscope, and evaluated in five ranks.

The ranking was 5 when no practical problem was found, and 1 when a practical problem was recognized.

(2) Drop-out change ( D.O. change ) and output drop after weatherability test

Prior to weatherability test, video signals were recorded in 8 mm magnetic tape by using 8 mm VTR modified for measurement of drop-out and RF output, and the drop-out and output drop were measured.

After the test, the drop-out and output drop were measured, and the rate of change before and after the test was expressed by the multiplication factor and decibel unit, respectively.

To measure the drop-out, using a drop-out counter (model VH01CZ of SHIBASOKU), in the condition setting of width of 15 $\mu$s and depth of 16 dB, the drop-out larger than the set condition in unit time was counted.

To measure the output drop, the RF output reproduced while running was rectified and recorded and measured in a pen recorder ( model VP - 6524 A of Matsushita Communication Industrial Co., Ltd.).

(3) Still frame life

After the weatherability test, the still frame life in the environment of 23 °C - 10 % RH was measured by using 8 mm VTR ( model MVS-5000 of Matsushita Electric Industrial Co., Ltd.).

(4) D.O. change, output drop, head clogging after, running durability test

Using the 8 mm VTR modified for measurement of drop-out and RF output, the running durability was tested by running each 8 mm tape specimen for 300 passes and 300 hours in the environment of 40 °C - 80 % RH.

Video signals were recorded before test, and the drop-out and output drop were measuredbefore and after test.

The measuring conditions of drop-out and output drop were same as in test (2).

To measure the head clogging, it was recognized as head clogging when the RF output was lowered by 6 dB or more, and the total time was measured.

The obtained results are shown in Tables 1, 2, 3.

It is obvious from these results that the embodiments of the present invention are excellent in weatherability and running durability as compared with the comparative embodiments.

In the embodiments of the present invention, the heterocyclic compound including nitrogen, heterocyclic compound including sulfur, heterocyclic compound including oxygen, organic compound including nitrogen and possessing $-NH_2$, $>NH$, $-CONH_2$, $-CONHR$, $-CONR_2$ as polar group, organic compound including sulfur and possessing $-SH$, $-SO_3M$ as polar group, organic compound including phosphorus and possessing $>PR$, $P(OR)$, $>P(OR)_2$, $>P(O)R$, $-OPO(OR)_2$, $>PSR$ as polar group, and organic compound including oxygen and possessing $-COOH$, $- COOR$ as polar group were presented, but the invention may be similarly applied to any organic compound selected from the group consisting of the organic compound including nitrogen and possessing $-NCO$, $-CSNH_2$, $-CSNHR$, $-CSNR_2$, $-PONH_2$, $-PONHR$, $-PONR_2$ as polar group, and organic compound including phosphorus and possessing $>PR_2$, $-PO-(OH)_2$, $>P(SR)_2$ as polar group.

Practical examples of the organic compound including nitrogen , organic compound including sulfur, organic compound including phosphorus, and organic compound including oxygen are catechol, resorcin, hydroquinone, their alkylamino, nitro, nitroso, halogeno substitution compound.

For example, divalent phenol group of 4-methylresorcinol, 2-aminoresorcinol, 2-nitroresorsinol, etc., alkyl phenols such as alkyl substitution compound of monovalent phenol of o-cresol, m-ethyl phenol, p-tert-butyl phenol, etc., α-naphthol, β-naphthol, 1,2-naphthalene diol, and their amino, nitro, nitroso, alkyl, alkylnitroso, and halogeno substitute compound, for example, 1-amino-2-naphthol, 1-nitro-2-naphthol, 1-nitroso-2-naphthol, other naphthols, o-benzoquinone, p-benzoquinone, 1,2-naphthoquinone, quinones of their derivatives, benzophenone, 3-methylbenzophenone, 4-hydroxybenzophenone, 4-aminobenzophenone, 4-methoxy-2-hydroxybenzophenone, benzophenone derivatives and diallyl ketone group, acridine, benzyl pyridine, 4-quinolinol, isonicotinic acid, 5-amino-1H-1,2,4-triazole, uracil, and other heterocyclic compounds including nitrogen atoms, sulfolane, 3-methylsulfolane, rhodanine, 3-aminorhodanine, thiazoline-4-carboxylic acid, and other heterocyclic compounds including sulfur atoms, tocopherol, quercetin, resorfin, 3-aminophthalimide, thymidine, and other heterocyclic compounds including oxygen atoms, 2-benzoxyazolthiol, thiophenol, propanethiol, thioxine, 5-nitro-2-benzimidazolthiol, and other compounds possessing mercapto radical, diazosulfide, benzothiazol, 2-methylbenzothiazol, benzothiazoline, other thiazole compounds, and moreover alkylamine, fatty acid salt of alkylamine, other basic nitrogen compounds, alkylphosphate, alkylthiophosphate, alkylhydrogen phosphate ester, phosphite ester, other phosphorus compounds, sulfonate petroleum, mahoganic sulfonate, dinonylnaphthalen sulfonate, and other sulfonic salts.

The thickness of the anticorrosive layer 4 was appropriate at 1 nm to 5 nm, and the forming method may be plasma CVD method istead of vacuum deposition.

In the embodiments, continuous forming of anticorrosive layer 4 and carbon film 5 was explained, but it is also possible to form the magnetic film 2, anticorrosive layer 4, carbon film 5, and lubricant film 6 continuously in vacuum.

As for the magnetic film 2, Co-Ni-O was explained, but Co-O, Co-Cr, and others can be used instead of Co-Ni-O. The thickness is formed in a range of 50 nm to 300 nm.

The nonmagnetic substrate 1 was polyethylene terephthalate, but it can be replaced by films of polyethylene naphthalate, aromatic polyamide, aromatic polyimide and others, or aluminum substrate, or glass substrate, among others.

On the magnetic layer forming side of the nonmagnetic substrate, protrusions of 10 to 30 nm should be formed, which should be optimum for realizing reliability and RF output at the same time.

Table 1

| Magnetic tape | Rust Peel | Weatherbility | | | | Running durability | | |
|---|---|---|---|---|---|---|---|---|
| | | D.O. change (times) | Decrease of output signal (dB) | Still frame life (min) | | D.O. change (times) | Decrease of output signal (dB) | Magnetic head clogging (sec) |
| Embod. 1 | 5 | 1. 4 | − 1. 5 | > 6 0 | | 1. 2 | − 1. 6 | 0 |
| Embod. 2 | 5 | 1. 5 | − 1. 3 | > 6 0 | | 0. 9 | − 1. 7 | 0 |
| Embod. 3 | 5 | 2. 1 | − 1. 4 | > 6 0 | | 1. 1 | − 1. 8 | 0 |
| Embod. 4 | 5 | 1. 3 | − 1. 8 | > 6 0 | | 1. 3 | − 1. 7 | 0. 5 |
| Embod. 5 | 5 | 1. 8 | − 1. 6 | > 6 0 | | 1. 2 | − 1. 6 | 0 |
| Embod. 6 | 5 | 1. 6 | − 1. 7 | > 6 0 | | 1. 4 | − 1. 5 | 0. 5 |
| Embod. 7 | 5 | 1. 5 | − 1. 8 | > 6 0 | | 1. 6 | − 1. 7 | 0. 5 |
| Embod. 8 | 5 | 1. 6 | − 1. 6 | > 6 0 | | 1. 6 | − 1. 3 | 0 |
| Embod. 9 | 5 | 2. 0 | − 1. 7 | > 6 0 | | 1. 7 | − 1. 9 | 0 |

EP 0 594 082 A1

Table 2

| Magnetic tape | Rust Peel | Weatherbility | | | | Running durability | | |
|---|---|---|---|---|---|---|---|---|
| | | D.O. change (times) | Decrease of output signal (dB) | Still frame life (min) | | D.O. change (times) | Decrease of output signal (dB) | Magnet Head clogging (sec) |
| Embod. 10 | 5 | 1. 9 | − 1.  9 | > 6 0 | | 1.  0 | − 1.  6 | 0 |
| Embod. 11 | 5 | 1. 7 | − 1.  3 | > 6 0 | | 1.  1 | − 1.  4 | 0 |
| Embod. 12 | 5 | 2. 0 | − 1.  6 | > 6 0 | | 1.  5 | − 1.  5 | 0.  5 |
| Embod. 13 | 5 | 1. 5 | − 1.  4 | > 6 0 | | 1.  3 | − 1.  9 | 0 |
| Embod. 14 | 4 | 1. 6 | − 1.  4 | > 6 0 | | 1.  1 | − 1.  8 | 0.  5 |
| Embod. 15 | 5 | 1. 5 | − 1.  2 | > 6 0 | | 0.  9 | − 1.  7 | 0 |
| Embod. 16 | 4 | 1. 8 | − 2.  1 | > 6 0 | | 1.  0 | − 1.  6 | 0.  5 |
| Embod. 17 | 5 | 1. 7 | − 1.  6 | > 6 0 | | 1.  2 | − 1.  4 | 0 |
| Embod. 18 | 4 | 1. 5 | − 1.  5 | > 6 0 | | 1.  4 | − 1.  7 | 1.  0 |

EP 0 594 082 A1

Table 3

| Magnetic tape | Weatherbility | | | | Running durability | | |
|---|---|---|---|---|---|---|---|
| | Rust Peel | D.O. change (times) | Decrease of output signal (dB) | Still frame life (min) | D.O. change (times) | Decrease of output signal (dB) | Magnetic head clogging (sec) |
| Compar. embod. 1 | 1 | 11.6 | − 5.6 | 7 | 7.4 | − 4.7 | 9.0 |
| Compar. embod. 2 | 2 | 5.7 | − 4.5 | 17 | 6.1 | − 3.8 | 7.5 |
| Compar. embod. 3 | 1 | 8.4 | − 6.1 | 4 | 7.7 | − 4.2 | 4.5 |
| Embod. 19 | 4 | 2.3 | − 1.5 | > 60 | 0.8 | − 0.8 | 0 |
| Compar. embod. 4 | 2 | 7.3 | − 5.7 | 11 | 6.9 | − 4.4 | 6.0 |

## Claims

1. A magnetic recording medium comprising:
   a nonmagnetic substrate;

11

a ferromagnetic thin film formed on said nonmagnetic substrate;

an anticorrosive layer formed by vaporization on said ferromagnetic thin film, wherein said anticorrosive layer is at least one selected from the group co nsisting of organic compound including nitrogen, organic compound including sulfur, organic compound including phosphorus and organic compound including oxygen;

a carbon film, of which Vickers hardness is 1,500 kg/mm$^2$ or more on said anticorrosive layer; and

a lubricant layer on said carbon film.

2. A magnetic recording medium of claim 1, wherein the organic compound including nitrogen is a heterocyclic organic compound.

3. A magnetic recording medium of claim 1, wherein the organic compound including nitrogen has at least one polar functional group selected from the group consisting of $-NH_2$, $>NH$, -NCO, $-CONH_2$, -CONHR, - $CONR_2$, $-CSNH_2$, -CSNHR, $-CSNR_2$, $-PONH_2$, -PONHR and $-PONR_2$ ( where R is a hydrocarbon functional group of which carbon number is 1 to 22 ).

4. Magnetic recording medium of claim 1, wherein the organic compound including sulfur is a multiring organic compound.

5. A magnetic recording medium of claim 1, wherein the organic compound including sulfur has at least one polar functional group selected from the group consisting of -SH and $-SO_3M$ ( where M is hydrogen, alkali ne metals or alkaline earth metals ).

6. A magnetic recording medium of claim 1, wherein the organic compound including phosphorus has at least one polar functional group selected from the group consisting of $>PR$, $>PR_2$, $>P(OR)$, $>P(OR)_2$, $>P(O)R$, $-OPO(OR)_2$, $-PO(OH)_2$, $>PSR$ and $>P(SR)_2$ ( where R is a hydrocarbon functional group of which carbon number is 1 to 22 ).

7. A magnetic recording medium of claim 1, wherein the organic compound including oxygen has at least one polar functional group selected from the group consisting of -COOH and -COOR ( where R is a hydrocarbonf unctional group of which carbon number is 1 to 22 ).

8. A method of manufacturing a magnetic recording medium comprising the steps of:

forming a ferromagnetic thin film on a nonmagnetic substrate by vacuum evaporation;

vaporizing an anticorrosive layer on said ferromagnetic thin film;

forming a carbon film on said anticorrosive layer by vacuum evaporation; and

forming a lubricant layer on said carbon film.

9. A method of manufacturing a magnetic recording medium of claim 8, wherein the step of vaporizing the anticorrosive layer on the ferromagnetic thin film is carried out by plasma chemical vapor deposition method.

Fig. 1

Fig. 2

| DOCUMENTS CONSIDERED TO BE RELEVANT | | | EP 93116728.2 | |
|---|---|---|---|---|
| Category | Citation of document with indication, where appropriate, of relevant passages | Relevant to claim | CLASSIFICATION OF THE APPLICATION (Int. Cl.5) | |
| X | PATENT ABSTRACTS OF JAPAN, unexamined applications, P field, vol. 16, no. 404, August 26, 1992 THE PATENT OFFICE JAPANESE GOVERNMENT page 70 P 1410 * No. 04-134 624 (MATSUSHITA) * | 1 | G 11 B 5/72 | |
| X | PATENT ABSTRACTS OF JAPAN, unexamined applications, P field, vol. 16, no. 404, August 26, 1992 THE PATENT OFFICE JAPANESE GOVERNMENT page 70 P 1410 * No. 04-134 625 (MATSUSHITA) * | 1 | | |
| X | EP - A - 0 432 536 (MATSUSHITA) * Claim 1 * | 1 | TECHNICAL FIELDS SEARCHED (Int. Cl.5) | |
| A | EP - A - 0 454 296 (MATSUSHITA) * Claim 1, page 3, lines 47-56 * | 1,2,7 | G 11 B 5/00 | |
| A | EP - A - 0 182 367 (HITACHI) * Claims 1,13; fig. 2 * | 1,9 | | |
| A | PATENT ABSTRACTS OF JAPAN, unexamined applications, P field, vol. 14, no. 462, October 05, 1990 THE PATENT OFFICE JAPANESE GOVERNMENT page 151 P 1113 | 1 | | |

The present search report has been drawn up for all claims

| Place of search | Date of completion of the search | Examiner |
|---|---|---|
| VIENNA | 18-11-1993 | HAMMER |

-2-
EP 93116728.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| | * No. 02-183 416 (HITACHI) * | | |
| A | PATENT ABSTRACTS OF JAPAN, unexamined applications, P field, vol. 14, no. 167, March 30, 1990 THE PATENT OFFICE JAPANESE GOVERNMENT page 144 P 1031   * No. 02-23 518 (HITACHI) * | 1,5 | |
| A | PATENT ABSTRACTS OF JAPAN, unexamined applications, P field, vol. 13, no. 209, May 17, 1989 THE PATENT OFFICE JAPANESE GOVERNMENT page 94 P 871   * No. 01-25 316 (SONY) | 1,2 | |
| A | PATENT ABSTRACTS OF JAPAN, unexamined applications, P field, vol. 16, no. 368, August 07, 1992 THE PATENT OFFICE JAPANESE GOVERNMENT page 97 P 1398   * No. 04-114 317 (MITSUBISHI) * | 1 | TECHNICAL FIELDS SEARCHED (Int. Cl.5) |
| A | PATENT ABSTRACTS OF JAPAN, unexamined applications, P field, vol. 14, no. 1, January 08, 1990 THE PATENT OFFICE JAPANESE GOVERNMENT page 83 P 985   * No. 01-253 819 (MATSUSHITA) * | 1,9 | |

The present search report has been drawn up for all claims

| Place of search | Date of completion of the search | Examiner |
|---|---|---|
| VIENNA | 18-11-1993 | HAMMER |

EPO FORM 1503 03.82 (P0401)